# FASCICULE DE BREVET EUROPEEN

(11) **EP 1 570 728 B1**
(45) Date de publication et mention de la délivrance du brevet: **09.12.2015**
(21) Numéro de dépôt: 05101580.8
(22) Date de dépôt: 02.03.2005
(51) Int. Cl.: A01G 25/16

(54) **Systeme de gestion de dispositifs d'arrosage automatique**
Steuerungssystem für eine automatische Bewässerungsvorrichtung
System for control of an automatic irrigation device

(30) Priorité: 04.03.2004 FR 0450440
(43) Date de publication de la demande: 07.09.2005
(73) Titulaire: JDS Invest, 06270 Villeneuve Loubet (FR)
(72) Inventeur: Hernandez, Jean-Daniel, 06360 Èze-sur-Mer (FR)
(74) Mandataire: Decobert, Jean-Pascal

(56) Documents cités:
- WO-A-01/22177
- WO-A-02/099543
- FR-A- 2 665 051
- FR-A- 2 828 062
- US-A1- 2003 126 295
- US-A1- 2003 182 022

## Description

La présente invention concerne un système de gestion de dispositifs d'arrosage automatique.

L'invention s'applique au domaine de l'arrosage automatique au sens large, comprenant l'arrosage dans des jardins privés ou publics, de terres agricoles, y compris pour l'irrigation.

Dans ce domaine, de façon générale, des dispositifs d'arrosage sont mis en place sur des sites et comportent un programmateur pour réaliser des cycles d'arrosage, le programmateur commandant une pluralité d'électrovannes d'ouverture et de fermeture de canalisation de circuit d'arrosage.

Les dispositifs implantés sur sites présentent certaines fonctionnalités et notamment permettent une programmation suivant des périodicités variables.

Cependant, de tels dispositifs n'offrent pas une grande flexibilité dans la mesure où toute anomalie de fonctionnement ou toute modification de réglage nécessite une intervention de personnel sur le site en cause.

Le document US 2003 0126295 A1 montre une installation de contrôle de dispositifs résidentiels avec des systèmes d'irrigation, employant une connexion Internet.

Le document US 2003 0182022 A1 montre un système d'irrigation avec un contrôleur d'irrigation et un ordinateur hôte échangeant des informations relatives à l'arrosage. Selon cette antériorité, aucune disposition précise n'est prévue pour gérer automatiquement les anomalies ni même pour les détecter et les identifier. Or, pour des installations volumineuses, cela peut provoquer une perte de temps et d'efficacité d'irrigation voire de plus graves problèmes tels des inondations.

La présente invention permet de remédier notamment à cet inconvénient et présente, pour ce faire, un nouveau système de gestion de dispositifs d'arrosage automatique.

De façon caractéristique à l'invention, ce système comporte un serveur central distant des sites d'implantation des dispositifs d'arrosage et d'autre part accessible par un poste utilisateur qui peut être un ordinateur conventionnel équipé de moyens de connexion à un réseau de large extension de type Internet ou encore tout autre moyen de communication du type assistant personnel numérique ou encore téléphone mobile.

De cette façon, la gestion du dispositif d'arrosage peut être réalisée de façon distante et de façon plus efficace par l'utilisateur. Celui-ci n'a pas à se déplacer et peut gérer, par le biais de l'interface du poste client, une pluralité de dispositifs d'arrosage.

Suivant une possibilité avantageuse, le système comporte des moyens de détection d'anomalie de fonctionnement et il assure, de façon autonome et automatique, la réaction appropriée. Le temps de traitement des dysfonctionnements est donc très court et les bonnes dispositions sont prises pour chaque type de problème.

D'autres buts et avantages apparaîtront au cours de la description qui suit d'un mode préféré de réalisation de l'invention.

La présente invention concerne un système de gestion de dispositifs d'arrosage automatique comportant un programmateur de cycles d'arrosage apte à commander au moins une électrovanne d'ouverture de circuits d'arrosage. Ce système est tel que :
- il comporte un serveur central communicant avec chaque dispositif d'arrosage par des moyens de communication sans fil et communicant avec au moins un poste utilisateur par des moyens de communication comprenant un réseau informatique de large extension, ledit serveur central comportant une application de gestion comprenant des instructions de programme pour :
   ◆ modifier les paramètres des cycles d'arrosage de chaque dispositif d'arrosage selon des données communiquées par le poste utilisateur,
   ◆ transmettre à chaque programmateur de dispositif d'arrosage les paramètres modifiés des cycles d'arrosage pour leur application.

Suivant des variantes préférées, ce système est tel que :
- le dispositif d'arrosage comprend des moyens pour :
   ◆ recevoir des informations sur des anomalies de fonctionnement des dispositifs d'arrosage,
   ◆ identifier l'anomalie,
   ◆ adresser au serveur central un message d'alerte correspondant à l'anomalie,
   ◆ recevoir des instructions de traitement d'anomalie aptes à produire
   une modification des paramètres des cycles d'arrosage,
   et l'application de gestion comprend des instructions de programme pour :
   ◆ recevoir un message d'alerte adressé par le dispositif d'arrosage,
   ◆ produire des instructions de traitement d'anomalie selon la nature de l'anomalie,
   ◆ adresser lesdites instructions au dispositif d'arrosage,
- les instructions de traitement d'anomalie sont transmises au programmateur pour modifier les paramètres des cycles d'arrosage,
- l'application de gestion comprend des instructions pour :
   ◆ recevoir des informations sur des anomalies de fonctionnement des dispositifs d'arrosage,
   ◆ transmettre au poste utilisateur un message d'anomalie.

Le système de l'invention est tel qu'il comporte, pour chaque dispositif d'arrosage, un contrôleur de débit relié à des capteurs de débit d'eau dans les canalisations d'arrosage et communicant avec le serveur central, les capteurs de débit d'eau ayant des gravures de mesures nominales différentes, ledit contrôleur de débit ayant des moyens de comparaison des débits mesurés avec des valeurs de débit prédéfinies pour détecter des anomalies et transmettre des informations d'anomalies au serveur central.

Suivant des variantes préférées, le système est tel que: - les capteurs de débit d'eau comportent des capteurs de faibles débits,
- le contrôleur de débit est relié au programmateur pour recevoir une indication d'état d'activité des cycles d'arrosage dans les canalisations d'arrosage où les capteurs de faibles débits sont montés,
- les moyens de comparaison sont configurés pour détecter une anomalie lorsqu'un capteur de faibles débits génère une mesure de débit d'eau non nul alors que le cycle d'arrosage dans la canalisation concernée est à l'état inactif,
- les capteurs de débit d'eau comportent des capteurs de débits élevés,
- le contrôleur de débit est relié au programmateur pour recevoir une indication d'état d'activité des cycles d'arrosage dans les canalisations d'arrosage où les capteurs de débits élevés sont montés,
- les moyens de comparaison sont configurés pour détecter une anomalie lorsqu'un capteur de débits élevés génère une mesure de débit d'eau en dehors d'un intervalle de valeurs prédéterminé alors que le cycle d'arrosage dans la canalisation concernée est à l'état actif,
- l'application de gestion comprend des instructions pour adresser un ordre au dispositif d'arrosage pour couper la circulation d'eau dans la canalisation où une anomalie a été détectée,
- il comporte un serveur distant communicant avec le serveur central par des moyens de communication, ledit serveur distant comprenant une base de données climatiques par site d'arrosage et étant apte à transmettre lesdites données climatiques au serveur central,
- le serveur central est un serveur web et les moyens de communication sans fil sont à la norme GSM/GPRS.

Le dessin ci-joint est donné à titre d'exemple et n'est pas limitatif de l'invention. Il représente seulement un mode de réalisation de l'invention et permettra de la comprendre aisément.

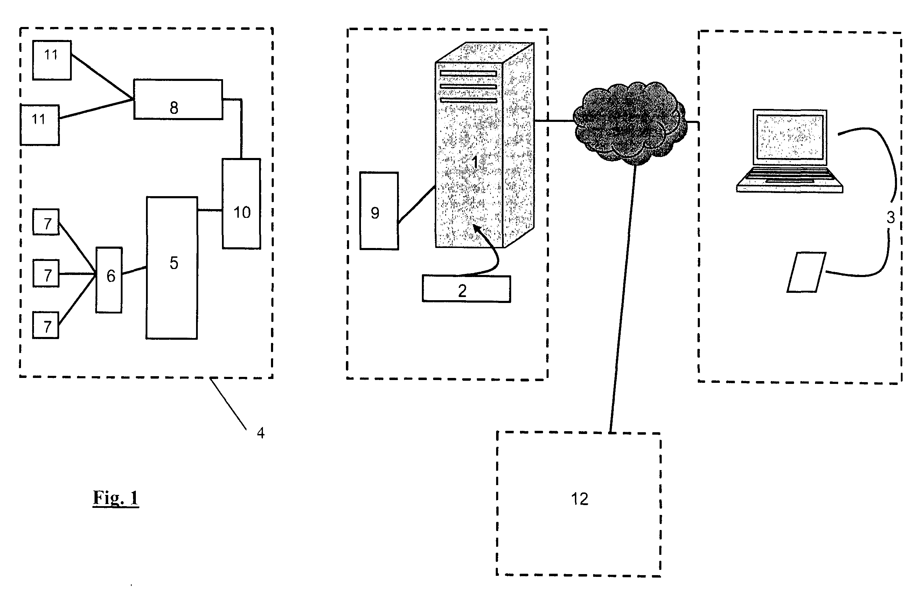

La figure 1 montre une vue d'ensemble du système selon l'invention.

Les blocs représentés en pointillé en figure 1 montrent différents composants de l'invention pouvant être situés de façon distante les uns des autres. En particulier, un dispositif d'arrosage 4 est représenté et peut être installé sur un site où l'arrosage est à réaliser. Bien qu'un seul dispositif 4 soit représenté, le nombre n'en est pas limitatif et dépend des configurations de sites et de leur nombre.

Le dispositif d'arrosage 4 communique par des moyens sans fil pouvant être par exemple une connexion de téléphonique mobile cellulaire notamment à la norme GSM/GPRS avec un serveur central. La partie serveur central 1 de type serveur web est elle-même en communication avec un ou plusieurs postes utilisateurs 3 également représentés dans un bloc en pointillés séparé.

Avantageusement, un serveur distant 12 est également présent avec une fonctionnalité additionnelle qui sera explicitée plus loin.

Le serveur central 1, le serveur distant 12 et le ou les postes utilisateurs 3 peuvent communiquer par des moyens de connexion courants et notamment par le biais d'un réseau de large extension du type Internet.

Au niveau du serveur central 1 est implémentée une application de gestion 2. Cette dernière est une application de type web accessible par un poste utilisateur 3 via un logiciel de navigation (de type Internet Explorer ®) de façon à fournir une interface utilisateur graphique au niveau du poste 3.

L'application de gestion 2 a essentiellement pour objet de réaliser l'intégralité des instructions de gestion du ou des dispositifs d'arrosage 4 distants.

On a représenté aux repères 9 et 10 des interfaces de communication respectivement au niveau du serveur central 1 et du dispositif d'arrosage 4, utilisant notamment la norme GSM, pour la communication entre les deux organes.

L'application de gestion 2 permet en particulier de modifier les paramètres des cycles d'arrosage suivant les données saisies au niveau du poste client, par l'intermédiaire d'une interface graphique utilisateur sous forme de pages web téléchargées et visualisées sur le navigateur du poste 3. Il est précisé que le serveur central 1 comporte des moyens de stockage nécessaires à la mémorisation des données concernant les différents paramètres des dispositifs d'arrosage, leur configuration et les programmes associés.

La modification opérée par l'utilisateur est répercutée par le serveur central 1 au niveau du dispositif 4 par communication sans fil de façon à modifier le programme implémenté au niveau du programmateur 5.

Au niveau du dispositif 4, le programmateur 5 comprend de façon usuelle un processeur et une mémoire, par exemple du type EEPROM pour la sauvegarde des données de programmation. Le programmateur 5 est relié à un tableau de commande 6 réalisant la centralisation de commandes électriques de diverses électrovannes 7 de conception courante aptes chacune à ouvrir ou à fermer une canalisation composant le circuit d'arrosage.

Suivant un mode préféré de réalisation de l'invention, le système permet la détection et la prise en compte, au niveau du serveur central 1, d'anomalies de fonctionnement des dispositifs d'arrosage 4.

Plus précisément, les anomalies peuvent être des débits anormaux en phase d'arrosage ou hors arrosage, des détections de conditions météorologiques spéciales (gel, vent, niveau d'hygrométrie, pluviométrie), ouverture de porte d'un local de maintenance, par exemple. Le terme anomalie s'entend donc de toute situation impliquant des répercussions sur le fonctionnement général.

Avantageusement, lors d'une détection et identification d'une anomalie au niveau du dispositif d'arrosage 4, une information est remontée vers le serveur central 1 pour que l'application de gestion 2 traite l'anomalie. Plus précisément, l'application de gestion 2 produit des instructions à exploiter au niveau de programmateur 5 pour réagir à l'évènement détecté.

Un exemple d'évènement d'anomalie et des réactions prises est donné ci après :

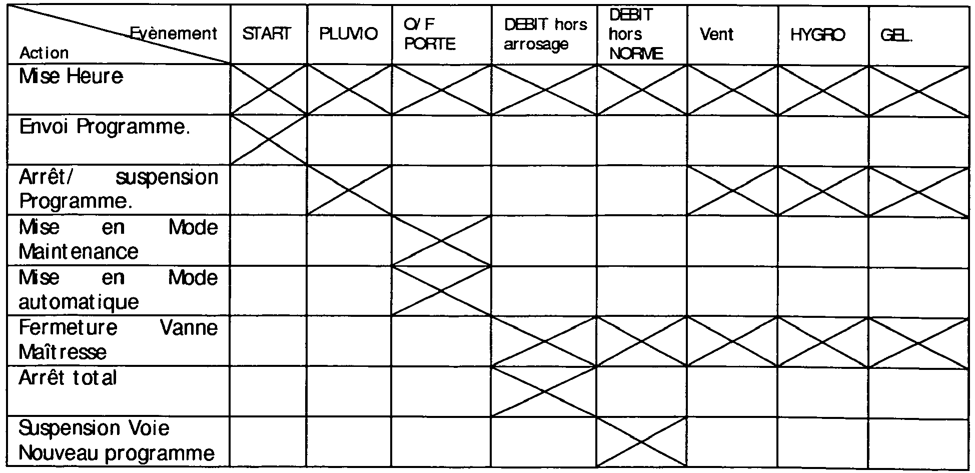

Les dispositifs d'arrosage 4 comportent ainsi avantageusement divers capteurs météorologiques et de débits d'eau.

Parmi les capteurs météorologiques, on prévoît notamment un anémomètre, un thermomètre, un pluviomètre et un hygromètre. En réglant sur site ou à distance un seuil de déclenchement sur chacun de ces capteurs, on peut retourner une information d'anomalie lorsque le seuil est franchi.

Une anomalie importante consiste en des problèmes de débit d'eau dans les circuits d'arrosage. Il convient donc de les traiter particulièrement.

A cet effet, un contrôleur de débit 8 est présent au niveau du dispositif 4 pour recevoir et traiter les informations de mesure de débit issues d'une pluralité de capteurs 11. Ces capteurs 11 sont montés à des points stratégiques des canalisations du circuit d'arrosage et permettent d'en mesurer le débit. Le contrôleur de débit 8 comprend également avantageusement un processeur de traitement des données de débit mesurées ainsi qu'une mémoire de stockage d'un code de programmation permettant de réaliser la comparaison entre les valeurs de débit mesurées et des valeurs prédéterminées pour révéler d'éventuelles anomalies de fonctionnement.

Si une anomalie est détectée par le contrôleur de débit 8, un signal est transmis à l'interface de communication 10 pour l'adresser à la partie serveur central 1. Ce dernier peut alors répercuter l'information au poste utilisateur 3 par le biais d'un message du type message électronique, un signal d'appel sur téléphone mobile ou encore par un message relevé par l'utilisateur lors d'une connexion du poste utilisateur au serveur central 1, et encore répondre automatiquement comme décrit précédemment.

Par ailleurs, le serveur central 1 comprend, au niveau de l'application de gestion 2, des instructions aptes à prendre des mesures de sauvegarde en cas d'anomalie. En particulier, des coupures d'électrovannes 7 peuvent être ordonnées par l'application de gestion 2 en cas d'anomalie de façon à éviter qu'une fuite perdure.

Avantageusement, on détecte deux types d'anomalies principales dans les canalisations.

Un premier type d'anomalie consiste en la présence d'un écoulement d'eau alors que le cycle d'arrosage passant par la canalisation considérée est à l'état de repos. A cet effet, des capteurs 11 de grande résolution capables de mesurer de faibles débits sont montés sur les canalisations pour donner une information d'écoulement précise au contrôleur de débit 8. Par ailleurs, le contrôleur de débit 8 reçoit une information d'activité ou d'inactivité des cycles d'arrosage pour la canalisation considérée. Le contrôleur de débit 8 interprète ces données entrantes de façon à détecter une anomalie lorsque un débit est mesuré par les capteurs 11 de faibles débits alors que le cycle d'arrosage est inactif.

Un deuxième type d'anomalie est détectable et consiste en une valeur exagérément supérieure ou inférieure du débit dans la canalisation relativement à une valeur nominale. En particulier, on détectera tout dépassement de la valeur du débit en dehors de l'intervalle de valeurs prédéterminé. A cet effet, des capteurs 11 aptes à la mesure de débits élevés, par exemple du type 10 litres / heure par impulsion du capteur (plutôt que 1 litre / heure pour les capteurs de faibles débits) sont montés dans les canalisations stratégiques. Si, lors d'un cycle d'arrosage, un capteur 11 de débits élevés révèle une valeur trop élevée de débit, une anomalie est détectée. Elle peut notamment consister dans la pratique à la rupture d'une buse de projection d'eau en surface qui occasionnerait une forte accélération de l'écoulement de l'eau dans la canalisation d'amenée d'eau à cette buse.

A l'inverse, des valeurs de débit mesuré inférieures à des valeurs prédéterminées peuvent également permettre de détecter une anomalie. Par exemple, il peut s'agir de perte de charge trop importante dans les canalisations due à des fuites parasites quand les canalisations sont en pression ou encore à un problème de puissance au niveau des moyens de pompage.

Pour réaliser les détections de débits élevés et de faibles débits, l'utilisation de capteurs 11 ayant des gammes de mesure nominales différentes permet une plus grande fiabilité du système.

De façon additionnelle, le système comprend un serveur distant 12 doté d'une base de données renfermant des données climatiques relatives aux différents sites à arroser. Parmi les données climatiques, l'indice ETP (évapo-transipration potentiel) peut être stocké et mis à jour régulièrement et être adressé périodiquement, ou à la demande de l'utilisateur, depuis le serveur distant 12 jusqu'au serveur central 1 pour répercuter l'information au niveau de l'application de gestion 2.

Les données climatiques sont prises en compte au niveau de l'application de gestion 2 pour modifier les cycles d'arrosage en fonction de l'historique et des prévisions climatiques. Cette prise en compte peut être automatique (notamment en adoptant une règle de proportionnalité entre la durée d'arrosage et l'indice ETP) ou encore être réalisée manuellement depuis un poste utilisateur 3.

Dans ce dernier cas, l'utilisateur accède, via une interface graphique sur son poste 3, à différents écrans de contrôle présentant les données climatiques et les paramètres de programmation de cycles d'arrosage avec des cases pouvant être modifiées ou remplies pour modifier lesdits paramètres.

L'utilisateur peut donc à tout moment contrôler de façon distante le fonctionnement du dispositif d'arrosage 4, en particulier détecter des anomalies de fonctionnement et agir sur chaque dispositif 4 pour en modifier les paramètres d'arrosage. Ce faisant, l'utilisateur peut prendre en compte des données objectives de météorologie et en particulier l'indice ETP.

### REFERENCES

1. Serveur central
2. Application
3. Poste utilisateur
4. Dispositif d'arrosage
5. Programmateur
6. Tableau de commande
7. Electrovanne
8. Contrôleur de débit
9. Interface de communication
10. Interface de communication
11. Capteur de débit
12. Serveur distant

## Revendications

1. Système de gestion de dispositifs d'arrosage (4) automatique comprenant une pluralité de dispositifs d'arrosage (4) automatique comportant chacun un programmateur (5) de cycles d'arrosage apte à commander au moins une électrovanne (7) d'ouverture de circuits d'arrosage , le système comportant un serveur central (1) communiquant avec chaque dispositif d'arrosage (4) par des moyens de communication sans fil et communiquant avec au moins un poste utilisateur (3) par des moyens de communication comprenant un réseau informatique de large extension, ledit serveur central (1) comportant une application de gestion (2) comprenant des instructions de programme pour :
◆ modifier les paramètres des cycles d'arrosage de chaque dispositif d'arrosage (4) selon des données communiquées par le poste utilisateur (3),
◆ transmettre à chaque programmateur (5) de dispositif d'arrosage (4) les paramètres modifiés des cycles d'arrosage pour leur
application,
**caractérisé par le fait**
**qu'**il comporte, pour chaque dispositif d'arrosage (4), un contrôleur de débit (8) relié à des capteurs (11) de débit d'eau dans les canalisations d'arrosage et communiquant avec le serveur central (1), les capteurs (11) de débit d'eau ayant des gammes de mesures nominales différentes, ledit contrôleur de débit (8) ayant des moyens de comparaison des débits mesurés avec des valeurs de débit prédéfinies pour détecter des anomalies et transmettre des informations d'anomalies au serveur central (1).

2. Système selon la revendication 1 dans lequel le dispositif d'arrosage (4) comprend des moyens pour :
◆ recevoir des informations sur des anomalies de fonctionnement des dispositifs d'arrosage (4),
◆ identifier l'anomalie,
◆ adresser au serveur central (1) un message d'alerte correspondant à l'anomalie,
◆ recevoir des instructions de traitement d'anomalie aptes à produire
une modification des paramètres des cycles d'arrosage,
et dans lequel l'application de gestion (2) comprend des instructions de programme pour :
◆ recevoir un message d'alerte adressé par le dispositif d'arrosage (4),
◆ produire des instructions de traitement d'anomalie selon la nature de l'anomalie,
◆ adresser lesdites instructions au dispositif d'arrosage (4).

3. Système selon la revendication 2 dans lequel les instructions de traitement d'anomalie sont transmises au programmateur (5) pour modifier les paramètres des cycles d'arrosage.

4. Système selon la revendication 1 ou 2 ou 3 **caractérisé par le fait que** l'application de gestion (2) comprend des instructions pour :
◆ recevoir des informations sur des anomalies de fonctionnement des dispositifs d'arrosage (4),
◆ transmettre au poste utilisateur (3) un message d'anomalie.

5. Système selon l'une des revendications précédentes **caractérisé par le fait que**
◆ - les capteurs (11) de débit d'eau comportent des capteurs de faibles débits,
◆ le contrôleur de débit (8) est relié au programmateur (5) pour recevoir une indication d'état d'activité des cycles d'arrosage dans les canalisations d'arrosage où les capteurs de faibles débits sont montés,
◆ les moyens de comparaison sont configurés pour détecter une anomalie lorsqu'un capteur de faibles débits génère une mesure de débit d'eau non nul alors que le cycle d'arrosage dans la canalisation concernée est à l'état inactif.

6. Système selon l'une des revendications précédentes **caractérisé par le fait que** :
◆ les capteurs (11) de débit d'eau comportent des capteurs de débits élevés,
◆ le contrôleur de débit (8) est relié au programmateur (5) pour recevoir une indication d'état d'activité des cycles d'arrosage dans les canalisations d'arrosage où les capteurs de débits élevés sont montés,
◆ les moyens de comparaison sont configurés pour détecter une anomalie lorsqu'un capteur de débits élevés génère une mesure de débit d'eau en dehors d'un intervalle de valeurs prédéterminé alors que le cycle d'arrosage dans la canalisation concernée est à l'état actif.

7. Système selon l'une quelconque des revendications précédentes **caractérisé par le fait que**
l'application de gestion (2) comprend des instructions pour adresser un ordre au dispositif d'arrosage (4) pour couper la circulation d'eau dans la canalisation où une anomalie a été détectée.

8. Système selon l'une quelconque des revendications 1 à 7 **caractérisé par le fait**
**qu'**il comporte un serveur distant (12) communicant avec le serveur central (1) par des moyens de communication, ledit serveur distant (12) comprenant une base de données climatiques par site d'arrosage et étant apte à transmettre lesdites données climatiques au serveur central (1).

9. Système selon l'une quelconque des revendications 1 à 8 **caractérisé par le fait que**
le serveur central (1) est un serveur web et que les moyens de communication sans fil sont à la norme GSM/GPRS.

## Patentansprüche

1. Steuerungssystem für automatische Bewässerungsvorrichtungen (4), eine Vielzahl von Bewässerungsvorrichtungen (4) umfassend, von denen jede ein Programmiergerät (5) für Bewässerungszyklen umfasst, das in der Lage ist, zumindest ein Magnetventil (7) zum Öffnen von Bewässerungskreisen anzusteuern, wobei das System einen zentralen Server (1) umfasst, der über drahtlose Kommunikationsmittel mit jeder Bewässerungsvorrichtung (4) kommuniziert, und über Kommunikationsmittel mit zumindest einer Benutzerstelle (3) kommuniziert, das ein Computernetzwerk mit einer großen Ausdehnung umfasst, wobei der besagte zentrale Server (1) eine Steuerungsanwendung (2) umfasst, die Programmbefehle enthält, um:
∘ die Parameter für die Bewässerungszyklen einer jeden Bewässerungsvorrichtung (4) gemäß den Daten zu verändern, die von der Benutzerstelle (3) übermittelt worden sind,
∘ einem jeden Programmiergerät (5) einer Bewässerungsvorrichtung (4) die veränderten Parameter für die Bewässerungszyklen für deren Anwendung zu übertragen,
**dadurch gekennzeichnet, dass**
es für jede Bewässerungsvorrichtung (4) einen Strömungswächter (8) umfasst, der mit den Sensoren (11) für die Wasserströmung in den Bewässerungskanälen verbunden ist und mit dem zentralen Server (1) kommuniziert, wobei die Sensoren (11) für die Wasserströmung unterschiedliche nominale Messbereiche aufweisen und der besagte Strömungswächter (8) Mittel zum Vergleichen der gemessenen Strömungen mit vorbestimmten Strömungswerten umfasst, um Anomalien zu erkennen und dem zentralen Server (1) Informationen über Anomalien zu übertragen.

2. System nach Anspruch 1, wobei die Bewässerungsvorrichtung (4) Mittel umfasst, um:
∘ Informationen über Anomalien beim Betrieb der Bewässerungsvorrichtungen (4) zu empfangen,
∘ die Anomalie zu identifizieren,
∘ dem zentralen Server (1) eine Warnmeldung zu senden, die der Anomalie entspricht,
∘ Instruktionen zur Behandlung der Anomalie zu empfangen, die in der Lage sind, eine Veränderung der Parameter der Bewässerungszyklen zu erzeugen,
und wobei die Steuerungsanwendung (2) Programmbefehle enthält, um:
∘ eine Warnmeldung zu empfangen, die von der Bewässerungsvorrichtung (4) geschickt wurde,
∘ je nach Art der Anomalie Instruktionen zur Behandlung der Anomalie zu erzeugen,
∘ der Bewässerungsvorrichtung (4) die besagten Instruktionen zu schicken.

3. System nach Anspruch 2, wobei die Instruktionen zur Behandlung der Anomalie dem Programmiergerät (5) übertragen werden, um die Parameter für die Bewässerungszyklen zu verändern.

4. System nach Anspruch 1 oder 2 oder 3, **dadurch gekennzeichnet, dass** die Steuerungsanwendung (2) Instruktionen umfasst, um:
∘ Informationen über Anomalien beim Betrieb der Bewässerungsvorrichtungen (4) zu empfangen,
∘ der Benutzerstelle (3) eine Nachricht über eine Anomalie zu übermitteln.

5. System nach irgendeinem der vorherigen Ansprüche, **dadurch gekennzeichnet, dass**
∘ die Sensoren (11) für die Wasserströmung Sensoren für schwache Strömungen umfassen,
∘ der Strömungswächter (8) mit dem Programmiergerät (5) verbunden ist, um einen Hinweis über den Aktivitätszustand der Bewässerungszyklen in den Bewässerungskanälen zu empfangen, in denen die Sensoren für schwache Strömungen verbaut sind,
∘ die Mittel zum Vergleichen konfiguriert sind, um eine Anomalie zu erkennen, wenn ein Sensor für schwache Strömungen eine Messung einer Wasserströmung ungleich Null erzeugt, während sich der Bewässerungszyklus im betroffenen Kanal im inaktiven Zustand befindet.

6. System nach einem der vorherigen Ansprüche, **dadurch gekennzeichnet, dass**:
∘ die Sensoren (11) für die Wasserströmung Sensoren für starke Strömungen umfassen,
∘ der Strömungswächter (8) mit dem Programmiergerät (5) verbunden ist, um einen Hinweis über den Aktivitätszustand der Bewässerungszyklen in den Bewässerungskanälen zu empfangen, in denen die Sensoren für starke Strömungen verbaut sind,
∘ die Mittel zum Vergleichen konfiguriert sind, um eine Anomalie zu erkennen, wenn ein Sensor für starke Strömungen eine Messung einer Wasserströmung außerhalb eines Intervalls an vorbestimmten Werten erzeugt, während sich der Bewässerungszyklus im betroffenen Kanal im inaktiven Zustand befindet.

7. System nach irgendeinem der vorherigen Ansprüche, **dadurch gekennzeichnet, dass**
die Steuerungsanwendung (2) Instruktionen umfasst, um der Bewässerungsvorrichtung (4) einen Befehl zum Unterbrechen der Wasserzirkulation im Kanal zu schicken, in dem eine Anomalie entdeckt worden ist.

8. System nach irgendeinem der Ansprüche 1 bis 7, **dadurch gekennzeichnet, dass**
es einen entfernt gelegenen Server (12) umfasst, der über Kommunikationsmittel mit dem zentralen Server (1) kommuniziert, wobei der besagte entfernt gelegene Server (12) eine Klimadatenbank je Bewässerungsstandort umfasst und in der Lage ist, dem zentralen Server (1) die besagten Klimadaten zu übertragen.

9. System nach irgendeinem der Ansprüche 1 bis 8, **dadurch gekennzeichnet, dass**
der zentrale Server (1) ein Web-Server ist und die drahtlosen Kommunikationsmittel mit der Norm GSM/GPRS arbeiten.

## Claims

1. System for managing automatic watering devices (4), comprising a plurality of automatic watering devices (4) each comprising a water-cycle programmer (5) able to control at least one solenoid valve (7) for opening watering circuits, the system comprising a central server (1) communicating with each watering device (4) by wireless communication means and communicating with at least one user station (3) through communication means comprising a wide-area communication network, said central server (1) comprising a management application (2) comprising program instructions for:
• modifying the parameters of the watering cycles of each watering device (4) according to data communicated by the user station (3),
• transmitting, to each programmer (5) of a watering device (4), the modified parameters of the watering cycles for application thereof,
**characterised by** the fact
that it comprises, for each watering device (4), a flow-rate controller (8) connected to water flow rate sensors (11) in the watering pipes and communicating with the central server (1), the water flow rate sensors (11) having different nominal measurement ranges, said flow-rate controller (8) having means for comparing the measured flow rates with predefined flow-rate values for detecting abnormalities and transmitting abnormality information to the central server (1).

2. System according to claim 1, in which the watering device (4) comprises means for:
• receiving information on operating abnormalities in the watering devices (4),
• identifying the abnormality,
• sending to the central server (1) an alert message corresponding to the abnormality,
• receiving abnormality-treatment instructions able to produce a modification to the parameters of the watering cycles,
and in which the management application (2) comprises program instructions for:
• receiving an alert message sent by the watering device (4),
• producing abnormality-treatment instructions according to the nature of the abnormality,
• sending said instructions to the watering device (4).

3. System according to claim 2, in which the abnormality-treatment instructions are transmitted to the programmer (5) for modifying the parameters of the watering cycles.

4. System according to claim 1 or 2 or 3, **characterised by** the fact that the management application (2) comprises instructions for:
• receiving information on operating abnormalities in the watering devices (4),
• transmitting an abnormality message to the user station (3).

5. System according to one of the preceding claims, **characterised by** the fact that
• the water flow rate sensors (11) comprise sensors for low flow rates,
• the flow-rate controller (8) is connected to the programmer (5) for receiving an indication on the state of activity of the watering cycles in the watering pipes where the low flow rate sensors are mounted,
• the comparison means are configured to detect an abnormality when a low flow rate sensor generates a non-zero measurement of water flow rate while the watering cycle in the pipe concerned is in the inactive state.

6. System according to one of the preceding claims, **characterised by** the fact that
• the water flow rate sensors (11) comprise sensors for high flow rates,
• the flow-rate controller (8) is connected to the programmer (5) for receiving an indication on the state of activity of the watering cycles in the watering pipes where the high flow rate sensors are mounted,
• the comparison means are configured to detect an abnormality when a high flow rate sensor generates a measurement of water flow rate outside a predetermined range of values while the watering cycle in the pipe concerned is in the active state.

7. System according to any one of the preceding claims, **characterised by** the fact that
the management application (2) comprises instructions for sending an order to the watering device (4) to cut off the flow of water in the pipe where the abnormality has been detected.

8. System according to any one of claims 1 to 7, **characterised by** the fact
that it comprises a remote server (12) communicating with the central server (1) by communication means, said remote server (12) comprising one climate database per watering site and being able to transmit said climate data to the central server (1).

9. System according to any one of claims 1 to 8, **characterised by** the fact that
the central server (1) is a web server and the wireless communication means are to the GSM/GPRS standard.
